# EUROPÄISCHE PATENTSCHRIFT

(11) **EP 0 690 538 B1**
(45) Veröffentlichungstag und Bekanntmachung des Hinweises auf die Patenterteilung: **27.05.1998**
(21) Anmeldenummer: 95250158.3
(22) Anmeldetag: 30.06.1995
(51) Int. Cl.: H02B 1/54, H02B 1/52

(54) **Metallgekapselte, druckgasisolierte Hochspannungsschaltanlage**
Metal-clad gas insulated high voltage switchgear
Installation de commutation haute tension blindée à isolation gazeuse

(30) Priorität: 01.07.1994 DE 9410869 U
(43) Veröffentlichungstag der Anmeldung: 03.01.1996
(73) Patentinhaber: SIEMENS AKTIENGESELLSCHAFT, 80333 München (DE)
(72) Erfinder: Bott, Helmut, D-12105 Berlin (DE); Bräunlich, Christoph, D-12529 Schönefeld b. Berlin (DE); Kelch, Thomas, D-13465 Berlin (DE); Pircher, Christian, D-13629 Berlin (DE)

(56) Entgegenhaltungen:
- EP-A- 0 091 354
- DE-U- 9 313 084
- DE-U- 9 410 869
- FR-A- 2 388 428
- BBC-NACHRICHTEN, Bd. 53, Nr. 1/2, Februar 1971 DE, Seiten 3-14, WILLI J. SCHMITT ET AL. 'Vollgekapselte, SF6-isolierte 110-kV-Schaltanlagen in der Energieversorgung.'
- BROWN BOVERI REVIEW, Bd. 74, Nr. 4, April 1987 BADEN, CH, Seiten 180-186, R. OTTISCHNIG ET AL. '245 kV Gas-Insulated Switchgear with Single-Chamber Circuit-Breakers.'

## Beschreibung

Die Erfindung bezieht sich auf eine metallgekapselte, druckgasisolierte Hochspannungsschaltanlage mit mehreren über je einen Zwischenflansch verbundenen Gehäusen und mit in den Flanschbereichen befestigten Querstreben zur Versteifung der Gehauseanordnung.

Bei einer bekannten Schaltanlage dieser Art (Siehe DE-U-9 313 084 und EP-A-0 091 354) sind zur Versteifung der Gehäuseanordnung bei Transporten oder erhöhten Erdbebensicherheitsanforderungen, aber auch zur Erhöhung der statischen Belastbarkeit von Gehausegruppen, im Bereich der Zwischenflansche Winkelträger angeschraubt, an denen die Querstreben befestigt sind. Die Winkelträger werden bedarfsweise dort positioniert, wo die Krafteinleitung unproblematisch ist. Der Aufwand an zusätzlichen Befestigungsmitteln ist jedoch beträchtlich.

Der Erfindung liegt die Aufgabe zugrunde, bei einer metallgekapselten, druckgasisolierten Hochspannungsschaltanlage der eingangs genannten Art Sondergehäuseformen bei einer optimalen Krafteinleitung zu vermeiden und den Aufwand an Befestigungsmitteln gering zu halten.

Nach der Erfindung wird diese Aufgabe dadurch gelöst, daß der Zwischenflansch an seiner Außenkontur angeformte Befestigungsvorsprünge aufweist, die mit den freien Enden der Querstreben verschraubbar sind.

Durch Anwendung der Erfindung lassen sich Hochspannungsschaltanlagen an denjenigen Stellen, die für eine wirksame Versteifung gebraucht werden, mit Zwischenflanschen versehen, deren Befestigungsvorsprünge zusätzliche Befestigungsmittel wie Winkelträger oder dergleichen entbehrlich machen. Es wird dementsprechend nur noch ein einziges Bauteil, nämlich ein Zwischenflansch als Krafteinleitungs- und Befestigungselement für die Querstreben benutzt, wobei alle übrigen Gehäuseteile und Gehäusebaugruppen in bewährter Baukastenweise bereitzustellen sind. Die Befestigungsvorsprünge erlauben ohne weiteres gegenüber der Befestigungsart mit Winkeln die Versteifung von Anlagenteilen mit lediglich unterschiedlichen Längen der Querstreben. Durch die Anordnung der Befestigungsvorsprünge am Zwischenflansch ist die Krafteinleitung verbessert.

Besonders vorteilhaft ist es in Ausgestaltung des Erfindungsgedankens, wenn die Befestigungsvorsprünge gabelförmig ausgebildet sind. Dabei können je zwei Gabelzinken eines Befestigungsvorsprunges ein Querstrebenende klauenartig umfassen und mittels eines Bolzens formschlüssig festlegen.

Bei einer besonders günstigen Ausführungsform nach der Erfindung ist der Zwischenflansch in seinem ringförmigen Querschnitt U-förmig ausgebildet und an der den beiden U-Schenkeln abgewandten Seite der U-Basis mit den Befestigungsvorsprüngen versehen.

Anhand der Zeichnung ist ein Ausführungsbeispiel einer metallgekapselten, druckgasisolierten Hochspannungsschaltanlage nach der Erfindung beschrieben und die Wirkungsweise erläutert.

Die Figur 1 zeigt schematisch in einer Ansicht einen Teil einer elektrischen, metallgekapselten, druckgasisolierten Hochspannungsschaltanlage.

Figur 2 zeigt schematisch eine Einzelheit aus Figur 1 in einer perspektivischen Darstellung.

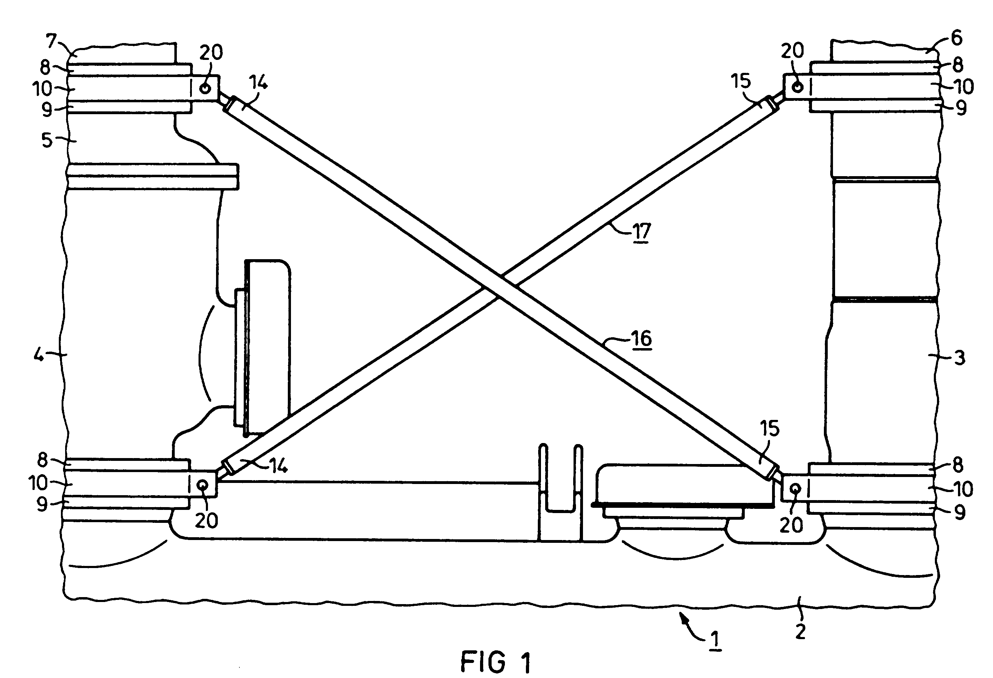

Die Figur 1 zeigt eine Hochspannungsschaltanlage 1 mit mehreren Gehäusen 2 bis 7, die die Metallkapselung für die die Hochspannung führenden Teile umgebenden Druckgasisolierung bilden. Die einzelnen Gehäuse 2 bis 7 sind jeweils über Flansche 8, 9 miteinander verbunden, wobei einige mit einem Zwischenflansch 10 versehen sind.

Der Zwischenflansch 10 ist zur Aufnahme von im wesentlichen scheibenförmig ausgebildeten Stützisolatoren bestimmt, die die Hochspannung führenden Teile der Anlage gegenüber der meist geerdeten Metallkapselung auf Abstand halten. Im Inneren der Gehäuse 2 bis 7 kann als Druckgas Schwefelhexafluorid, beispielsweise unter einen Druck von 2 bis 8 bar eingefüllt, sein.

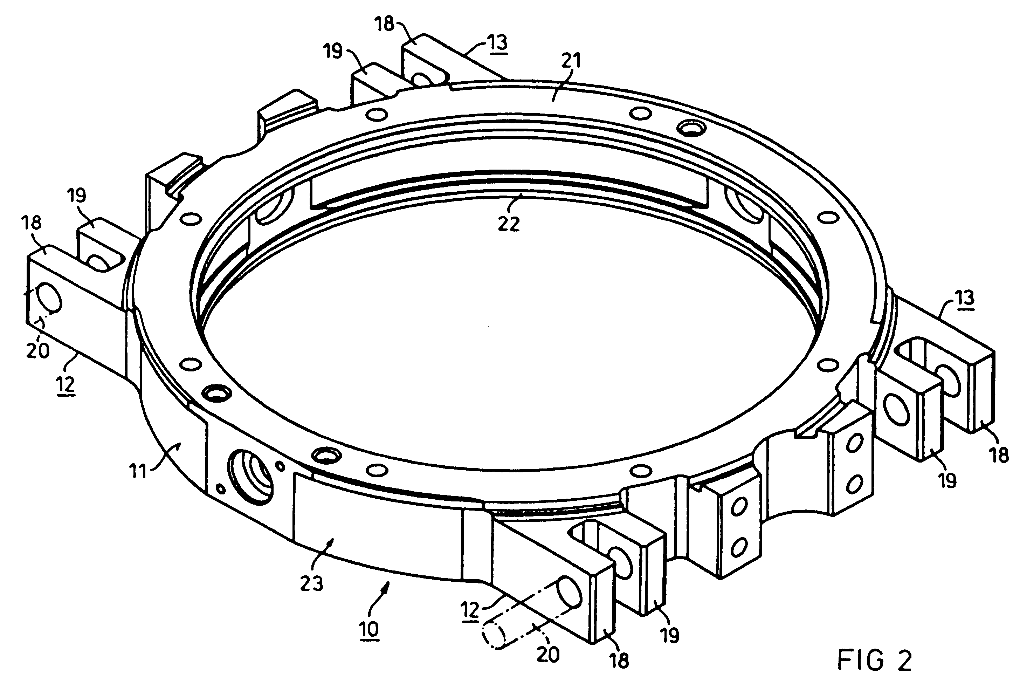

Wie die Figur 2 als Einzelheit gut erkennen läßt, ist der Zwischenflansch 10 an seiner Außenkontur 11 mit angeformten Befestigungsvorsprüngen 12, 13 versehen, die mit den freien Enden 14, 15 von Querstreben 16, 17 verschraubbar sind. Die Befestigungsvorsprünge 12, 13 sind gabelförmig ausgebildet, wobei je zwei Gabelzinken 18, 19 ein Querstrebenende 14 oder 15 klauenartig umfassen und mittels eines Bolzens 20 formschlüssig festlegen.

Ersichtlich ist der Zwischenflansch 10 in seinem ringförmigen Querschnitt im wesentlichen U-förmig ausgebildet, wobei er an der den beiden U-Schenkeln 21, 22 abgewandten Seite der U-Basis 23 die Befestigungsvorsprünge 12, 13 trägt.

Die Querstreben 16, 17 tragen zur Versteifung der Gehäuseanordnung bei und dienen der Erhöhung der Erdbebensicherheit der Anlage. Sie sind auch als Transportsicherungselemente verwendbar und können die Statik der metallgekapselten, druckgasisolierten Hochspannungsschaltanlage verbessern.

## Patentansprüche

1. Metallgekapselte, druckgasisolierte Hochspannungsschaltanlage mit mehreren über je einen Zwischenflansch (10) verbundenen Gehäusen (2-7) und mit in den Flanschbereichen befestigten Querstreben (16,17) zur Versteifung der Gehäuseanordnung,
**dadurch gekennzeichnet,** daß
der Zwischenflansch (10) an seiner Außenkontur (11) angeformte Befestigungsvorsprünge (12, 13) aufweist, die mit den freien Enden (14, 15) der Querstreben (16, 17) verschraubbar sind.

2. Hochspannungsschaltanlage nach Anspruch 1,
**dadurch gekennzeichnet,** daß
die Befestigungsvorsprünge (12, 13) gabelförmig ausgebildet sind.

3. Hochspannungsschaltanlage nach Anspruch 2,
**dadurch gekennzeichnet,** daß
je zwei Gabelzinken (18, 19) eines Befestigungsvorsprunges (12, 13) ein Querstrebenende (14, 15) klauenartig umfassen und mittels eines Bolzens (20) formschlüssig festlegen.

4. Hochspannungsschaltanlage nach Anspruch 1 oder einem der folgenden,
**dadurch gekennzeichnet,** daß
der Zwischenflansch (10) in seinem ringförmigen Querschnitt U-förmig ausgebildet ist und an der den beiden U-Schenkeln (21, 22) abgewandten Seite der U-Basis (2, 3) die Befestigungsvorsprünge (12, 13) trägt.

## Claims

1. Metal-clad, compressed-gas-insulated high voltage switchgear having several housings (2 - 7) connected by way of a respective intermediate flange (10) and having cross struts (16, 17) fastened in the flange regions in order to reinforce the housing arrangement, characterized in that the intermediate flange (10) has fastening projections (12, 13) integrally moulded to its outer contour (11), which fastening projections can be screwed to the free ends (14, 15) of the cross struts (16, 17).

2. High voltage switchgear according to claim 1, characterized in that the fastening projections (12, 13) are constructed in a fork shape.

3. High voltage switchgear according to claim 2, characterized in that in each case two fork prongs (18, 19) of a fastening projection (12, 13) encompass a cross strut end (14, 15) in a claw-like manner and fix it in a form-locking manner by means of a bolt (20).

4. High voltage switchgear according to claim 1 or one of the following claims, characterized in that the intermediate flange (10) is constructed in a U-shape in its annular cross section and supports the fastening projections (12, 13) at the side of the U-base (2, 3) which is directed away from the two U-limbs (21, 22).

## Revendications

1. Installation de coupure haute tension à blindage métallique, isolée par un gaz sous pression et comportant des boîtiers (2 à 7) reliés par l'intermédiaire d'une bride (10) intermédiaire et des entretoises (16, 17) fixées dans les zones de brides pour rendre rigide le montage de boîtiers, caractérisée en ce que la bride (10) intermédiaire comporte sur son contour (11) extérieur des parties (12, 13) en saillie de fixation qui en sont issues et qui peuvent être fixées aux extrémités (14, 15) libres des entretoises (16, 17).

2. Installation de coupure haute tension suivant la revendication 1, caractérisée en ce que les parties (12, 13) en saillie de fixation sont réalisées en forme de fourche.

3. Installation de coupure haute tension suivant la revendication 2, caractérisée en ce que deux lames (18, 19) de fourche d'une partie (12, 13) en saillie de fixation entourent à la façon d'une griffe une extrémité (14, 15) d'entretoises et la fixe par complémentarité de forme au moyen d'un boulon (20).

4. Installation de coupure haute tension suivant la revendication 1 ou l'une des suivantes, caractérisée en ce que la bride (10) intermédiaire de section transversale annulaire est réalisée en forme de U et porte les parties (12, 13) en saillie de fixation du côté de l'âme (2, 3) du U éloignée des deux branches (21, 22) du U.
